# EUROPEAN PATENT SPECIFICATION

(11) **EP 2 192 741 B1**
(45) Date of publication and mention of the grant of the patent: **17.07.2013**
(21) Application number: 09175824.3
(22) Date of filing: 12.11.2009
(51) Int. Cl.: H04L 29/06, H04L 12/18

(54) **Transmitting apparatus, communication system, transmitting method, and corresponding software**
Übertragungsvorrichtung, Kommunikationssystem, Übertragungsverfahren, und entsprechende Software
Appareil de transmission, système de communication, procédé de transmission, et logiciel correspondant

(30) Priority: 26.11.2008 JP 2008300976
(43) Date of publication of application: 02.06.2010
(73) Proprietor: FUJITSU LIMITED, Kawasaki-shi, Kanagawa 211-8588 (JP)
(72) Inventor: Takechi, Ryuichi, Kanagawa 211-8588 (JP)
(74) Representative: Stebbing, Timothy Charles

(56) References cited:
- EP-A1- 1 808 995
- WO-A1-2005/076562
- US-A1- 2005 094 670

## Description

The present invention relates to a transmitting apparatus, a receiving apparatus, a transmitting method, and a receiving method. The present invention may be used in, for example, techniques for compressing and extracting a packet header.

As techniques used when packet data is transferred from a transmitting end (transmitting apparatus) to a receiving end (receiving apparatus), there are, for example, header compression techniques.
In the techniques, for example, a static (unchanging) part of a header of packet data is not transferred but a dynamic (changing) part is transferred, whereby a reduction in the amount of packet data transferred is achieved.

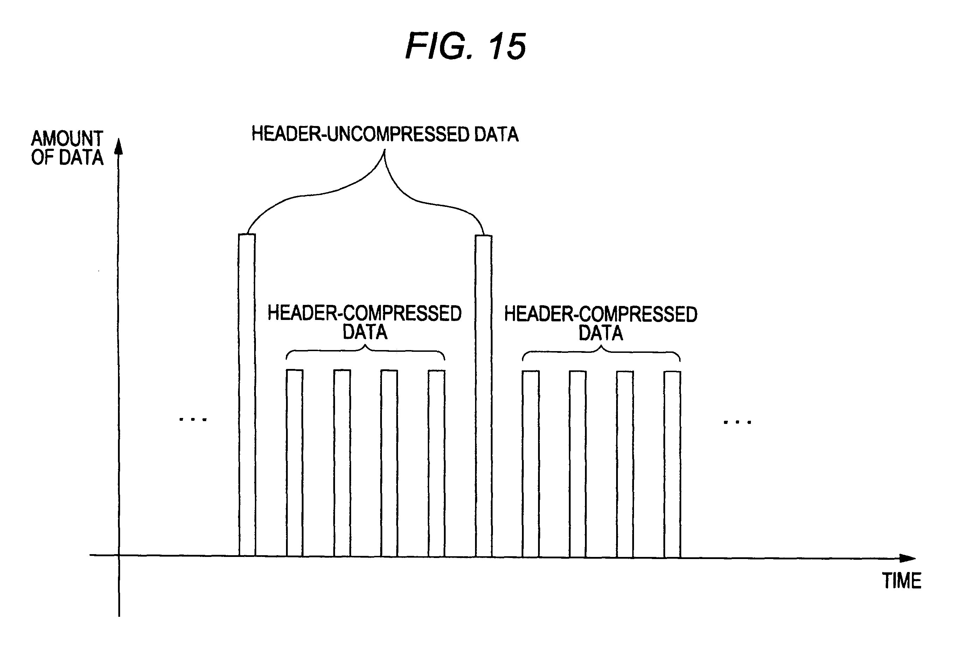

As one of the header compression techniques, there is, for example, a Robust Header Compression (RoHC) technique. In RoHC, as exemplified in FIG. 15, while header-uncompressed data are transmitted in a specified cycle, header-compressed data are transmitted in a cycle shorter than the specified cycle. In addition, according to a result of a header expansion (extraction) process at a receiving end, the header compression efficiency at a transmitting end is adaptively controlled.

Such a header compression technique is effective when a radio link with many restrictions on transfer capacity is present between a transmitting end and a receiving end. Hence, for example, in Long Term Evolution (LTE), which is next generation cellular access technology whose standardization proceeds in the 3rd Generation Partnership Project (3GPP), the above-described header compression technique is adopted as a Packet Data Convergence Protocol (PDCP) layer component.

Meanwhile, in cellular networks, Multimedia Broadband and Multicast Service (MBMS) is defined as a technique for multicasting content to a plurality of receivers (receiving ends) (e.g., Universal Mobile Telecommunications System (UMTS) terminals). In the MBMS, by one-to-multiple connections, the same data is multicast to a plurality of receivers.

For existing techniques related to the MBMS, there is known, for example, a method in which a multicast communication system provides, after a certain session ends, notification of information about data that has not been properly received by a terminal, to a UMTS Terrestrial Radio Access Network (UTRAN), and receives data that is retransmitted from the UTRAN (see, for example, Japanese National Publication of International Patent Application No. 2007-518307).

In a communication system using a header compression technique (e.g., RoHC) such as that described above, a packet data transmitter (transmitting end) holds information (context) about a compression state, e.g., which part of a header is compressed or a compression rate thereof.
A packet data receiver (receiving end) can appropriately expand (extract) a compressed packet header received from the transmitting end, based on the context received in advance from the transmitting end.

An example of the compression state at the transmitting end is an IR (Initialization and Refresh) state in which all header information is transmitted without compression. A header-uncompressed packet to be transmitted at this time includes the above-described context. In addition, there is a First Order (FO) state in which a part of header information that dynamically changes (a sequence number, etc.) is transmitted, and a Second Order (SO) state in which a part of the header information that dynamically changes is encoded to transmit only a minimum field. In RoHC, three transfer modes, a Unidirectional (U) mode, an Optimistic (O) mode, and a Reliable (R) mode are defined and a transition from one mode to another can be performed during communication.

On the other hand, for the expansion state at the receiving end, there is, for example, a No Context (NC) state in which there is no header information for decoding, a Static Context (SC) state having static header information (an address, a port number, etc.) (i.e., reception and update of dynamic fields are required), and a Full Context (FC) state in which difference information of header values that dynamically change can be decoded (i.e., field information can be properly decoded).

In the U mode, for example, the above-described context is updated periodically, e.g., when a specified period of time has elapsed or when a certain amount of packet data has passed through, and notification of the context is provided to a receiving end. Accordingly, the receiving end can extract header-compressed data, based on the context which is periodically updated and notification of which is provided from the transmitting end.
Now, a wireless communication system that uses both the above-described header-compressed technique and the foregoing MBMS is being considered.

In such a wireless communication system, for example, while header-compressed data is communicated between a receiving apparatus having a context and a transmitting apparatus, a receiving apparatus (new branch) having no context may participate in the wireless communication system (may be connected to a multicast service).
However, in conventional techniques, the new branch does not hold a context, thus even if the new branch receives header-compressed packet data from the transmitting apparatus, the new branch may not find out how the header has been compressed.

As a result, the new branch may not be able to expand (extract) the header-compressed packet data until receiving a context which is periodically updated and notification of which is provided from the transmitting apparatus.

Accordingly, it is desirable to provide a transmitting apparatus which can facilitate efficiently performance of a header expansion process.
US 2005/094670 discloses a method for acquiring a Header Compression (HC) context information in User Equipment (UE) to receive a packet data service from a mobile communication system. In the method, the UE receives packet data including a compressed header from a Radio Network Controller (RNC), and determines whether to request retransmission of all or part of the header compression context, based on the received packet data, and transmits the determined retransmission request to the RNC. The RNC retransmits all or part of the header compression context to the UE in response to the determined retransmission request.
The invention is defined in the independent claims.

According to an example, there is provided a transmitting apparatus that transmits data to a plurality of receiving apparatuses, the transmitting apparatus including a transmission part that transmits information for extracting the data whose header is compressed, and a control part that controls the transmission part to transmit the information in a specified cycle to the one or more first receiving apparatus and to transmit the information to a second receiving apparatus at a timing independent of the specified cycle when that second receiving apparatus did not receive the information during the specified cycle.
The features and advantages of the invention will be realized and attained by means of the elements and combinations particularly pointed out in the claims.
It is to be understood that both the foregoing general description and the following detailed description are exemplary and explanatory and are not restrictive of the invention, as claimed.
Reference is made, by way of example only, to the accompanying drawings in which:
FIG. 1 is a diagram illustrating an exemplary configuration of a wireless communication system according to one embodiment;
FIG. 2 is a block diagram illustrating an exemplary configuration of an MBMS-GW illustrated in FIG. 1;
FIG. 3 is a block diagram illustrating an exemplary configuration of a UE illustrated in FIG. 1;
FIG. 4 is a flowchart illustrating an exemplary operation of the wireless communication system illustrated in FIG. 1;
FIG. 5 is a diagram illustrating an exemplary configuration of a header;
FIG. 6 is a diagram illustrating an example of context information obtained at points A and C;
FIG. 7 is a diagram illustrating an example of context information obtained at point B;
FIG. 8 is a flowchart illustrating an exemplary operation of the wireless communication system according to a first variant;
FIG. 9 is a flowchart illustrating an exemplary operation of the wireless communication system according to a second variant;
FIG. 10 is a flowchart illustrating an exemplary operation of the wireless communication system according to the second variant;
FIG. 11 is a diagram illustrating an exemplary configuration of a wireless communication system according to a third variant;
FIG. 12 is a flowchart illustrating an exemplary operation of the wireless communication system illustrated in FIG. 11;
FIG. 13 is a flowchart illustrating an exemplary operation of the wireless communication system illustrated in FIG. 11;
FIG. 14 is a flowchart illustrating an exemplary operation of the wireless communication system according to a fourth variant; and
FIG. 15 is a diagram illustrating a header compression state in RoHC.

An embodiment will be described below with reference to the drawings.

### [1] Embodiment.

### (1.1) Communication control method according to the present embodiment.

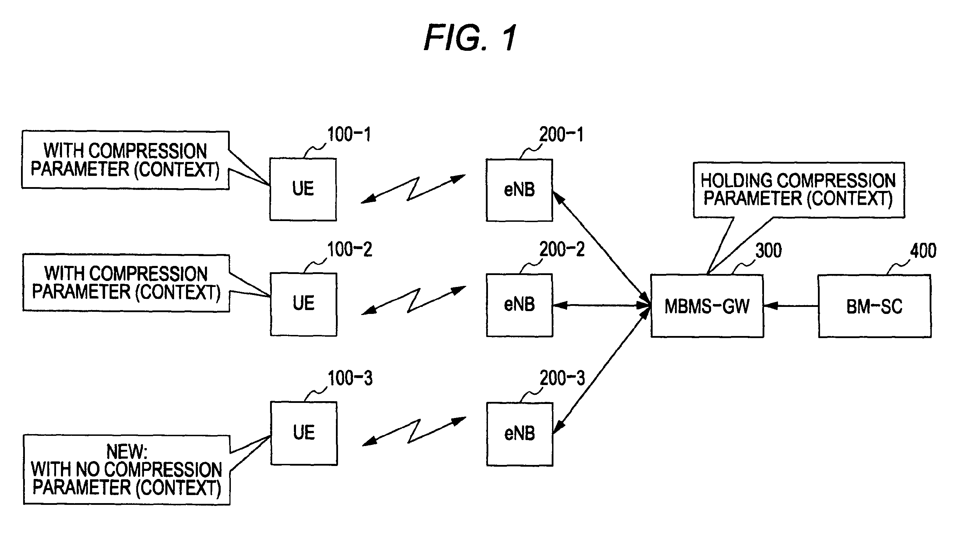

FIG. 1 is a block diagram illustrating an exemplary configuration of a wireless communication system according to one embodiment.

The wireless communication system illustrated in FIG. 1 includes, for example, a Multicast Broadcast and Multicast Service Gateway (MBMS-GW) 300 and a host node (e.g., Broadcast Multicast-Service Center (BM-SC)) 400 of the MBMS-GW 300. The BM-SC 400 can communicate with the MBMS-GW 300 through, for example, a specified wired interface. The wireless communication system illustrated in FIG. 1 includes, for example, a plurality of wireless base stations (e.g., e-Nodes B, eNBs) 200-1, 200-2, and 200-3. Each of the eNBs 200-1, 200-2, and 200-3 can communicate with the MBMS-GW 300 through, for example, a specified wired interface. The wireless communication system illustrated in FIG. 1 includes, for example, User Equipments (UEs, e.g., mobile stations) 100-1, 100-2, and 100-3 which can wirelessly communicate with any of the eNBs 200-1, 200-2, and 200-3.

In the following, when the eNBs 200-1, 200-2, and 200-3 are not distinguished from one another they are collectively referred to as the eNBs 200, and when the UEs 100-1, 100-2, and 100-3 are not distinguished from one another they are collectively referred to as the UEs 100. A communication direction from the BM-SC 400 to the MBMS-GW 300, a communication direction from the MBMS-GW 300 to the eNBs 200, and a communication direction from the eNBs 200 to the UEs 100 are referred to as the down link and an opposite direction thereto is referred to as the up link. The numbers of the eNBs 200 and the UEs 100 are not limited to those exemplified in FIG. 1.

The BM-SC 400 is connected to a core network such as the Internet (not illustrated) to provide, for example, a multicast service (MBMS) to the MBMS-GW 300. Accordingly, the BM-SC 400 can manage users who receive the MBMS and send out MBMS data.
The MBMS-GW 300 performs various controls for the MBMS, for example. Thus, the MBMS-GW 300 has, for example, a control plane (C-Plane) that processes control information about the MBMS; and a user plane (U-Plane) that processes user data. The C-Plane is a block that processes control information, and, for example, performs transmission and reception of control messages such as the start and end of the MBMS, with the UEs 100 or the BM-SC 400. The U-Plane is a block that processes user data, and, for example, distributes (multicasts) user data (MBMS data) from the BM-SC 400 to the UEs 100. The U-Plane, for example, controls the compression state of a header of MBMS data using a compression parameter (context) which is based on a header compression state.

The MBMS-GW 300 in the present example, for example, controls a header part of the above-described MBMS data to be compressed or uncompressed according to a specified rule (e.g., a method based on RoHC). That is, the MBMS-GW 300 is an example of a transmitting apparatus that controls the header compression state of data destined for the plurality of UEs 100 to be compressed or uncompressed and transmits the data.
The eNBs 200 each provide at least one wireless zone (e.g., a cell or sector) and can wirelessly communicate with a UE(s) 100 located in the wireless zone. For example, an eNB 200 transmits multicast service data received from the MBMS-GW 300, to a UE 100. Also, the eNB 200 can transmit data (e.g., control data) received from the UE 100, to the MBMS-GW 300.

The UEs 100 receive down link data (MBMS data) transmitted from the MBMS-GW 300. When the MBMS data received from the MBMS-GW 300 is header-uncompressed data, the UEs 100 can extract a context included in the data and hold the context. On the other hand, when the MBMS data received from the MBMS-GW 300 is header-compressed data, the UEs 100 can extract a header of the header-compressed data based on the above-described context held by the UEs 100. Note, however, that when the UEs 100 do not have the above-described context, it is difficult for the UEs 100 to extract a header from the header-compressed data. In an example illustrated in FIG. 1, each of the UE 100-1 and the UE 100-2 holds a context but the UE 100-3 does not have a context.

In a compression control sequence by the MBMS-GW 300, for example, header-uncompressed data is transmitted to the UEs 100 in a specified cycle and header-compressed data is transmitted at timings other than the specified cycle. Accordingly, the UEs 100 can extract and update a context included in the header-uncompressed data received in the specified cycle and extract a header of the header-compressed data using the context.

However, during a period in which the MBMS-GW 300 transmits header-compressed data to the UEs 100 (and intervals between transmission cycles of header-uncompressed data), the UE 100-3, having no context, (new branch) may participate in (may be connected to) the MBMS network.
In such a case, even if the UE 100-3 receives header-compressed data from a corresponding eNB 200, since the UE 100-3 does not have a context, it is difficult for the UE 100-3 to appropriately extract a header of the header-compressed data.

Thus, the UE 100-3 has difficulty extracting compressed packet data until receiving a context at the first reception (update) timing of header-uncompressed data after participating in the MBMS network. As a result, the data communication efficiency of the system may decrease.
In the present example, for example, the MBMS-GW 300 transmits a context to the UEs 100-1 and 100-2 holding contexts, in a specified transmission cycle of header-uncompressed data. On the other hand, the MBMS-GW 300 transmits a context to the UE 100-3 holding no context, at timing independent of the specified transmission cycle of header-uncompressed data.

Accordingly, the UE 100-3 can reduce the time until receiving a context, enabling to efficiently perform a header expansion process.

### (1.2) MBMS-GW 300.

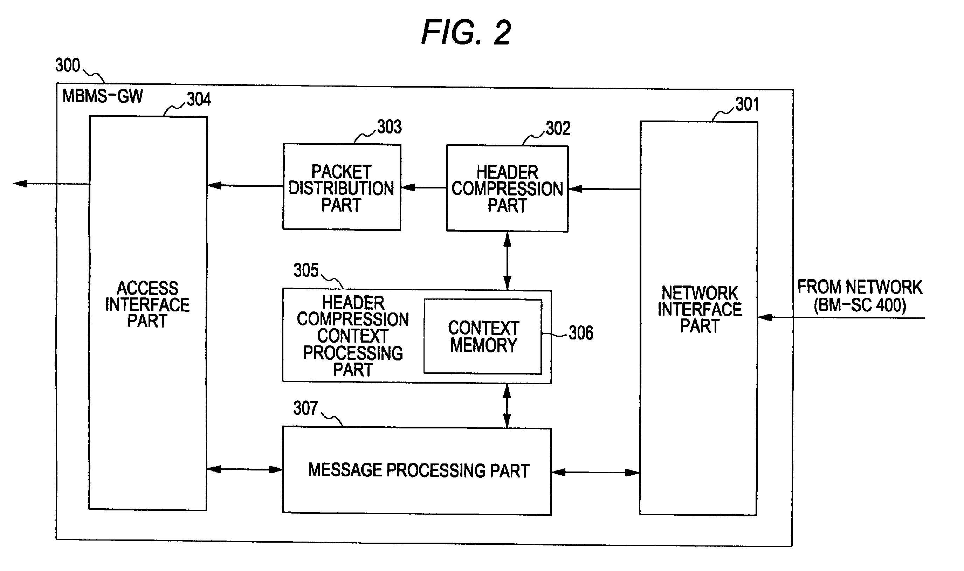

FIG. 2 is a block diagram illustrating an example of the configuration of the MBMS-GW 300 according to an example embodiment. The MBMS-GW 300 illustrated in FIG. 2 includes, for example, a network interface part 301, a header compression part 302, a packet distribution part 303, and an access interface part 304. The MBMS-GW 300 also includes, for example, a header compression context processing part 305 having a context memory 306, and a message processing part 307.

The network interface part 301 serves as an interface between the BM-SC 400 and the MBMS-GW 300. Data transmitted from the BM-SC 400 and received by the network interface part 301 (MBMS data, etc.) is, for example, subjected to a termination process in a physical layer or data link layer.
Of the data received from the BM-SC 400, a U-Plane packet (user data destined for the UEs 100) is passed to the header compression part 302. A C-Plane packet (control data indicating the start, end of the MBMS, etc.) is transmitted and received between the network interface part 301 and the message processing part 307.

The header compression part 302 performs a compression process on a header part included in the user data transmitted from the network interface part 301 (replaces an original header with a compressed header) based on the content of a context, notification of which is provided from the header compression context processing part 305. The user data (packet data) may have, for example, a header part and a payload part.

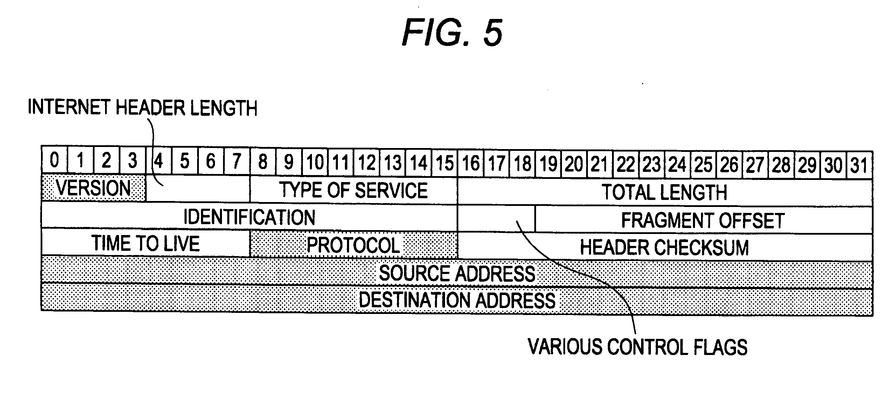

The above-described compression processing method will be described using FIG. 5.
The above-described header part of the user data has, for example, as illustrated in FIG. 5, version, Internet header length, type of service, total length, identification, various control flags, fragment offset, time to live, protocol, header checksum, source address, and destination address fields. In FIG. 5, an option field is not illustrated.

The version field stores the version of an Internet Protocol (IP). For example, in the case of IPv4, the value "4" is stored in the version field.
The Internet Header Length (IHL) field stores the length of the IP header. This value is represented as a four-octet value and is used to find out the position of a payload part in the packet data.

The Type Of Service (TOS) field stores information indicating a service on which importance is placed when the packet data is transferred.
The Total Length (TL) field stores information indicating the total length of the packet data including the IP header part.
The identification field stores a value uniquely indicating a source of the packet data. This value may be used, for example, to extract fragmented packet data.

The various control flags field stores information about control of fragmentation of the packet data. For example, storing "1" in the second bit indicates inhibition of fragmentation and storing "0" in the third bit indicates that the packet data is the last data. Here, the first bit may be reserved and not be used.
The Fragment Offset (FO) field stores information about a position when a router or the like fragments the packet data, as an eight-octet value, for example.

The Time To Live (TTL) field stores information indicating the lifetime of the packet data. For example, first, an upper limit number of routers through which the packet data can pass, which is set by the source of the packet data is stored. This value is decremented by one every time the packet data passes through a router. When the value reaches "0", the packet data is discarded. Accordingly, the packet data can be prevented from circulating endlessly in the network.

The protocol field stores a value indicating an upper-layer protocol such as TCP. When an apparatus which is the destination of the packet data receives a packet, the apparatus identifies an upper-layer protocol using this value and passes a payload part to an implementation part of the upper-layer protocol.
The header checksum field stores information used for IP header error check.

The source address field stores a source address of the packet data. The destination address field stores a destination address of the packet data.
Shaded parts in the header part exemplified in FIG. 5 indicate fields that are fixed and thus are unchanging. For example, the fields of the shaded parts may not be repeatedly transmitted. Accordingly, by transmitting fields other than the fields of the shaded parts, the amount of header information transmitted can be compressed.

The header compression context processing part 305 manages and controls a header compression state (header-uncompressed or header-compressed and a compression state thereof) for each connection used to transmit user data. For example, in compression control by a RoHC scheme, the compression state of a header can be transitioned and information (context) about the compression state can be stored in the context memory 306. When compression of a header of user data is controlled, information (context) for extracting a header compression state is held (stored) in the context memory 306.

The context memory 306 stores a context. The context may be updated (or accumulated) every time the header compression state is transitioned.
The packet distribution part 303 makes a number of copies of user data whose header is compressed by the header compression part 302. The number corresponds to the number of eNBs 200 being in communication. The copied header-compressed data are distributed to the respective UEs 100 through the eNBs 200.

As described above, the header compression part 302, the header compression context processing part 305, and the packet distribution part 303 perform a process as a U-Plane in the MBMS-GW 300.
The message processing part 307 performs analysis and generation of control data (control message). The message processing part 307 analyzes the content of a control message received from another node and performs various controls (e.g., sending out a response message or setting a parameter in the apparatus).
In addition, the message processing part 307 can perform, using a generated control message, communication control of another node or control of each part in the MBMS-GW 300. That is, the message processing part 307 performs a process as a C-Plane in the MBMS-GW 300.

When the message processing part 307 in the present example receives from the UE 100-3 (new branch) a control message indicating participation in the MBMS network, the message processing part 307 reads a context stored in the context memory 306. Then, the message processing part 307 provides notification of the context (or information for creating a context) read from the context memory 306 to the UE 100-3 through the access interface part 304 and the eNB 200-3. That is, the message processing part 307 can provide notification of information for extracting header-compressed data to the UE 100-3 at a time determined according to a timing at which the message processing part 307 receives from the UE 100-3 a request to receive MBMS data. This notification timing can be set to be different from a context notification cycle (transmission cycle of header-uncompressed data) for other UEs 100-1 and 100-2 having contexts.

The access interface part 304 serves as an interface between the eNBs 200 and the MBMS-GW 300 and transmits user data copied by the packet distribution part 303 and a control message generated by the message processing part 307, to the eNBs 200. The user data may be header-compressed data or may be header-uncompressed data including a context. The control message may include a context for a new branch. That is, the access interface part 304 in the present example is an example of a transmission part that transmits a context to the UEs 100.

The message processing part 307 in the present example is an example of a control part that controls the access interface part 304 to transmit a context to the UEs 100-1 and 100-2 holding contexts, in a specified cycle, and to transmit a context to the UE 100-3 holding no context, at a timing independent of the above-described cycle.

### (1.3) eNB 200.

An eNB 200 can, for example, transmit (relay) data transmitted from the MBMS-GW 300 (MBMS user data, a context, etc.), to at least one UE 100 located in a wireless zone provided by the eNB 200. Also, the eNB 200 provides notification of a message requesting participation in a multicast service, which is received from the UE 100, to the MBMS-GW 300, and can thereby control participation of the UE 100 in the MBMS.

### (1.4) UE 100.

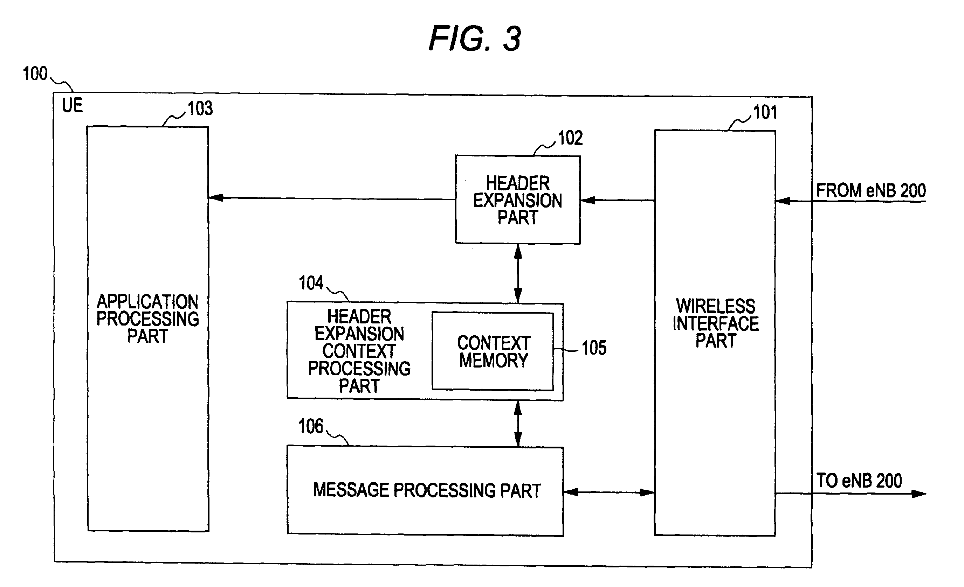

A UE 100 includes, as exemplified in FIG. 3, a wireless interface part 101, a header expansion part 102, and an application processing part 103. The UE 100 further includes, for example, a header expansion context processing part 104 having a context memory 105, and a message processing part 106.

The wireless interface part 101 serves as an interface between an eNB 200 and the UE 100. Data transmitted from the eNB 200 and received by the wireless interface part 101 (MBMS data, control data, etc.) is, for example, subjected to a termination process in a physical layer or data link layer.
Of the data received from the eNB 200, a U-Plane packet (user data destined for the UE 100) is passed to the header expansion part 102. A C-Plane packet (control data indicating the start, end, etc., of the MBMS) is transmitted and received between the wireless interface part 101 and the message processing part 106.

The MBMS-GW 300 in the present example transmits header-uncompressed data having a context to the UEs 100-1 and 100-2 which hold a context in advance (which have already participated in the MBMS), in a specified cycle. On the other hand, the MBMS-GW 300 in the present example transmits a control message having a context to the UE 100-3 which does not hold a context (which has newly participated in the MBMS), at a timing different from the specified cycle.

Namely, the wireless interface part 101 in the present example is an example of a reception part that receives a context at a timing independent of a specified cycle, in which a context is transmitted to other UEs 100-1 and 100-2 holding contexts.
The header expansion part 102 performs an expansion (extraction) process on a header part included in user data transmitted from the wireless interface part 101, based on the content of a context, notification of which is provided from the header expansion context processing part 104.

The header expansion context processing part 104 manages and controls a header expansion processing state of a header part of user data for each connection. For example, the header expansion context processing part 104 can extract a context from header-uncompressed data received from the MBMS-GW 300 and store the context in the context memory 105. Also, the header expansion context processing part 104 can extract a context from a control message including the context, which is received from the MBMS-GW 300, and store the context in the context memory 105.

The context memory 105 stores a context. The context may be updated (or accumulated) every time a new context is received from the MBMS-GW 300.
That is, the header expansion part 102 is an example of an extraction part that extracts header-compressed user data (MBMS data) based on a context received by the wireless interface part 101.

The message processing part 106 performs analysis and generation of control data (control message). The message processing part 106 analyzes the content of a control message received from another node and performs various controls (e.g., sending out a response message or setting a parameter in the apparatus). The message processing part 106 can also perform communication control of another node or control of each part in the MBMS-GW 300 using a generated control message. The control message includes, for example, a message requesting participation in the MBMS.

The application processing part 103 passes user data (MBMS data), whose header is extracted by the header expansion part 102, to an appropriate application and performs a specified process. For example, when the received user data is a moving image, the application processing part 103 passes the user data to a moving image (e.g. playback application, etc.), whereby the moving image can be played back.

### (1.5) Exemplary operation of the wireless communication system.

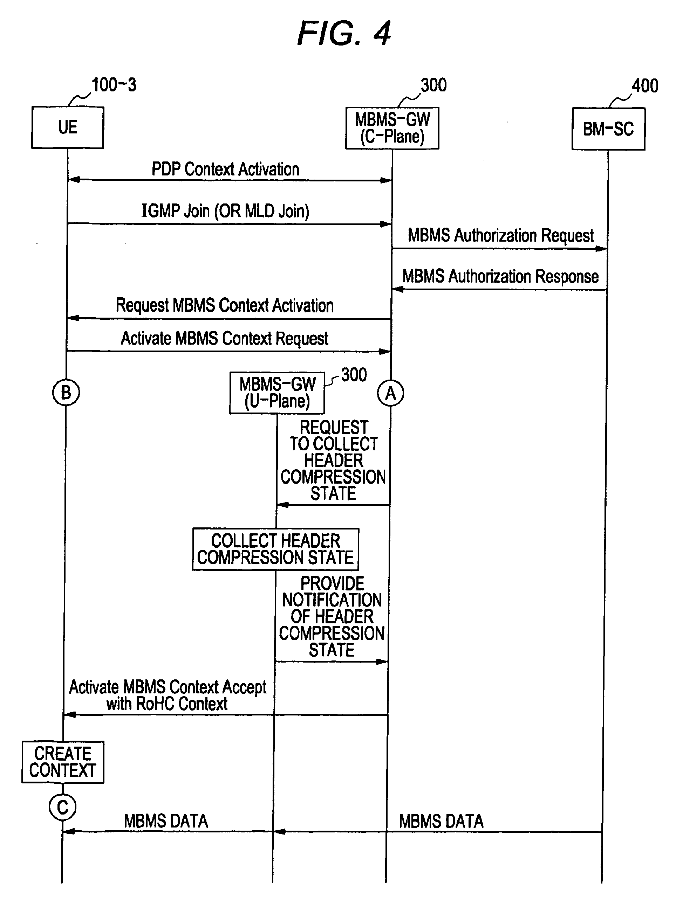

An example of the operation of the above-described wireless communication system will be described using FIG. 4.

First, the UE 100-3 which is going to participate in the MBMS (which does not hold a context) establishes a Packet Data Protocol (PDP) context with the MBMS-GW 300 (mainly, C-Plane), using a PDP context activation procedure. With the PDP context establishment, the data transfer between the UE 100-3 and the MBMS-GW 300 is enabled.
The UE 100-3, having established the PDP context, issues an IP multicast protocol to the MBMS-GW 300 and thereby requests the MBMS. The IP multicast protocol is an Internet Group Management Protocol (IGMP) join message in the case of IPv4, and is a Multicast Listener Discovery (MLD) join message in the case of IPv6.

The MBMS-GW 300, having received the IP multicast protocol from the UE 100-3, transmits an MBMS authorization request message (MBMS Authorization Request) to the BM-SC 400. Then, the BM-SC 400, having received the MBMS authorization request message from the MBMS-GW 300, provides notification of an MBMS authorization response message (MBMS Authorization Response) to the MBMS-GW 300 if the BM-SC 400 authorizes the MBMS. Accordingly, participation of the UE 100-3 in the MBMS network is allowed.

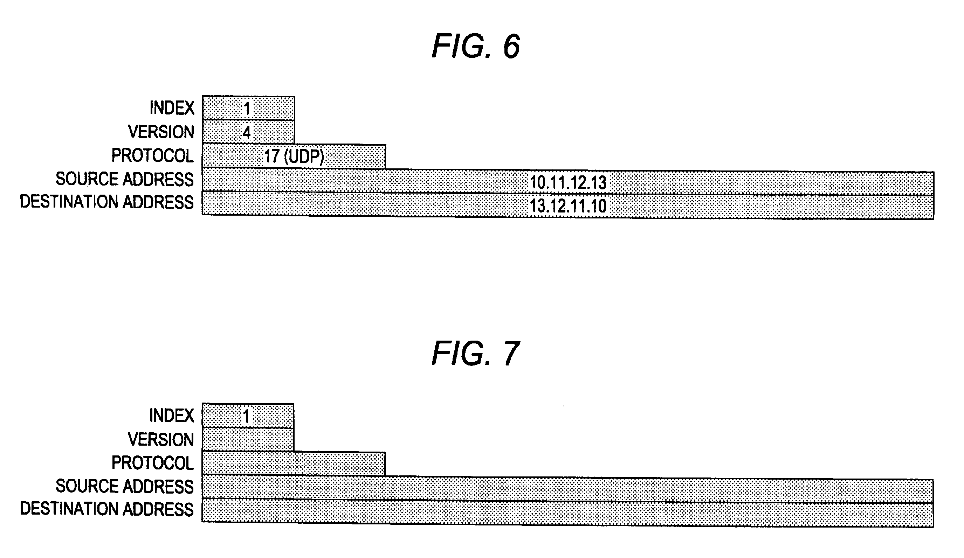

Subsequently, the MBMS-GW 300 transmits an MBMS activation authorization message (Request MBMS Context Activation) to the UE 100-3. The UE 100-3, having received the MBMS activation authorization message, transmits an MBMS activation message (Activate MBMS Content Request) to the MBMS-GW 300. This enables the UE 100-3 to receive MBMS data (multicast data).
At this time, the MBMS-GW 300 (see the circled A (point A) in FIG. 4) manages the header compression state of MBMS data. As exemplified in FIG. 6, the MBMS-GW 300 at point A holds the values of fixed information fields that are not included in header-compressed data. In an example illustrated in FIG. 6, for example, the index is "1", the version is "4", the protocol is "17 (UDP)", the source address is "10.11.12.13", and the destination (UE 100) address is "13.12.11.10". The index is an index number indicating the type of data to be compressed.

On the other hand, the UE 100-3 (see the circled B (point B) in FIG. 4) that has participated in the MBMS does not hold a context. Hence, as exemplified in FIG. 7, the UE 100-3 at point B does not have any information other than the index being "1". Therefore, in this state, the UE 100-3 has difficulty with normally expanding header-compressed data until the UE 100-3 receives header-uncompressed data in a specified cycle and extracts a context therefrom.

Thus, the MBMS-GW 300 requests the U-Plane of the MBMS-GW 300 itself to collect information about the current header compression state.
The U-Plane of the MBMS-GW 300, having received the request, collects information (a header compression state, a context, etc.) regarding a header compression process and provides notification of the information to the C-Plane of the MBMS-GW 300.

The C-Plane of the MBMS-GW 300, having received the notification, generates and edits a control message including a context for extracting header-compressed data, and transmits the control message to the UE 100-3. At this time, the C-Plane of the MBMS-GW 300 may provide to the UE 100-3 notification of a context, together with a response message indicating allowance of participation in the MBMS (Activate MBMS Context Accept).

The UE 100-3, having received the message from the MBMS-GW 300, can create a context for extracting header-compressed data, based on information included in the message. Alternatively, the UE 100-3 can extract a context included in the message.
Accordingly, as exemplified in FIG. 6, the UE 100-3 (see the circled C (point C) in FIG. 4) can hold the values of fixed information fields that are not included in header-compressed data, based on the context. In the example illustrated in FIG. 6, for example, the index is "1", the version is "4", the protocol is "17 (UDP)", the source address is "10.11.12.13", and the destination (UE 100) address is "13.12.11.10".

As a result, the UE 100-3 can normally expand (extract) header-compressed data (MBMS data) received from the BM-SC 400 and the MBMS-GW 300. Namely, by extracting a part of header information that is not included in header-compressed data, MBMS data can be normally subjected to a reception process.
As described above, in the communication control method in the present example, notification of a context is individually provided to the UE 100-3 that has participated in the MBMS and that does not have a context. This enables the UE 100-3 to efficiently perform a header expansion process even before header-uncompressed data is transmitted in a specified cycle.

### [2] First Variant.

In the above-described example, the MBMS-GW 300 individually notifies the new branch 100-3, having no context, of a context to the new branch 100-3, having no context, at a timing different from a transmission cycle of header-uncompressed data. However, when notification of a context is individually provided, as the number of UEs 100 that participate in the MBMS increases, the amount of notifications processed by the MBMS-GW 300 may increase and, in addition, the amount of data communicated in a network may increase.

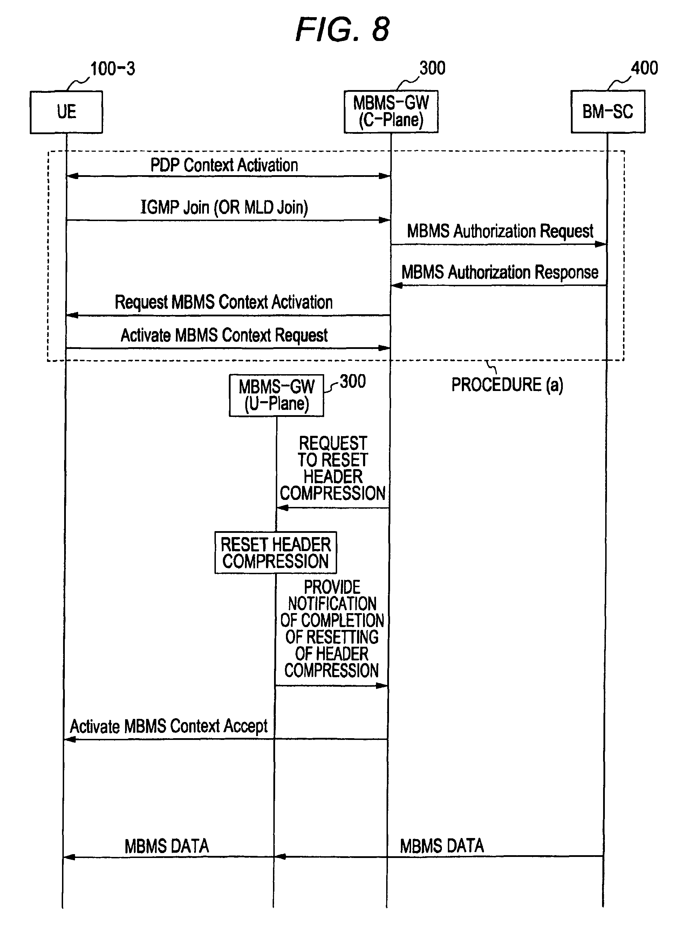

In the present example, when the new branch 100-3 participates in the MBMS, the header compression state of MBMS data may be set back (reset) to a header-uncompressed state and header-uncompressed data may be multicast to the UEs 100.
An exemplary operation of the wireless communication system in the present example will be described using FIG. 8. Note that a description of the portion that is the same as that in the operation already described (the procedure (a) portion encircled by a dashed line in FIG. 8) will not be repeated.

The MBMS-GW 300, having detected participation of the new branch 100-3 in the MBMS, requests the U-Plane of the MBMS-GW 300 itself to set back (initialize or reset) the current header compression state to a header-uncompressed state.
The U-Plane of the MBMS-GW 300, having received the request, sets a header compression state back to a header-uncompressed state. Then, the U-Plane of the MBMS-GW 300 provides notification of a reset (initialization) completion report to the C-Plane of the MBMS-GW 300, indicating that the initialization has been completed.

That is, in the present example, a context (header-uncompressed data) is transmitted not only to the UE 100-3 having no context, but also to the UEs 100-1 and 100-2 holding contexts, at timings other than a specified cycle in which header-uncompressed data is transmitted.
Accordingly, after the new branch 100-3 participates in the MBMS, the new branch 100-3 first receives header-uncompressed data and thus can immediately hold a context.

As a result, the UE 100-3 can normally expand (extract) header-compressed data (MBMS data) received from the BM-SC 400 and the MBMS-GW 300.
As described above, in the present example, when the MBMS-GW 300 detects that the UE 100-3, having no context, is participating in the MBMS, the MBMS-GW 300 resets the header compression state and transmits header-uncompressed data to the UEs 100, which are a multicasting target. Accordingly, the same effects as those obtained in the above-described embodiment can be obtained and, in addition, control by the UEs 100 and the MBMS-GW 300 can be simplified.

### [3] Second Variant.

In the present example, switching between individually providing notification of a context to participant UEs 100 and initializing a header compression state so as to multicast header-uncompressed data to the UEs 100 may be performed according to the participation condition (e.g., participation frequency) of the UEs 100 in the MBMS.
For example, when the number of UEs 100 that participate in the MBMS during a specified period of time is less than a specified number, notification of a context is individually provided to the participant UEs 100. Accordingly, the participant UEs 100 can efficiently perform a header expansion process while the overall traffic of the wireless communication system is reduced.

On the other hand, when the number of UEs 100 that participate in the MBMS during the specified period of time is the specified number or more, the header compression state is reset so that header-uncompressed data is multicast to the UEs 100. Accordingly, processes performed by the UEs 100 and the MBMS-GW 300 can be simplified.
That is, in the present example, when a request to receive MBMS data is received from less than a specified number of UEs 100 during a specified time period, the MBMS-GW 300 transmits a context to the newly participating UEs 100 at a timing determined by a lapse of the specified period of time.

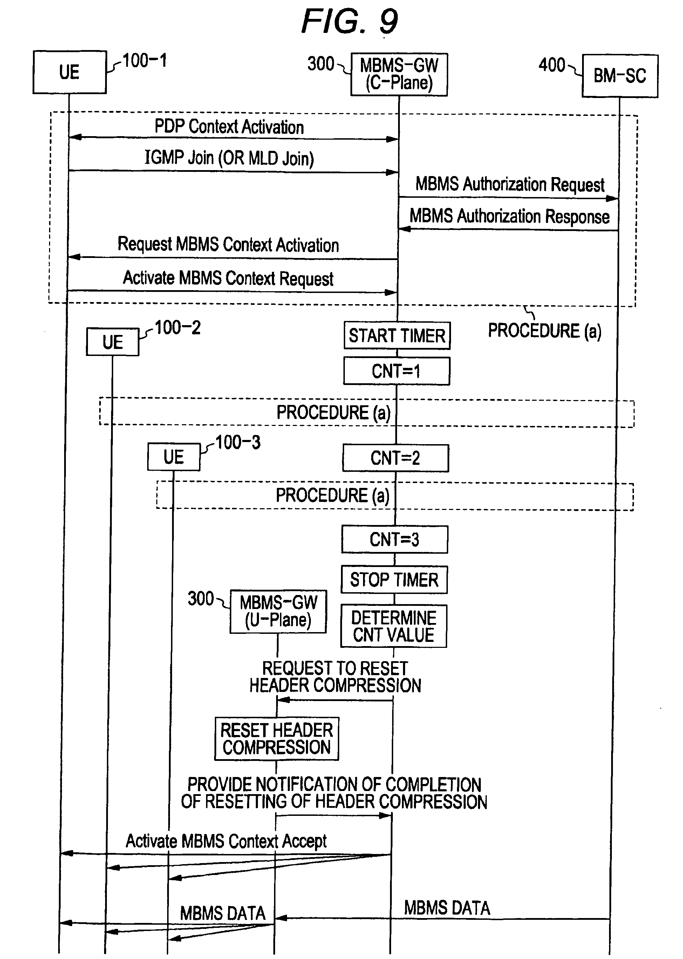

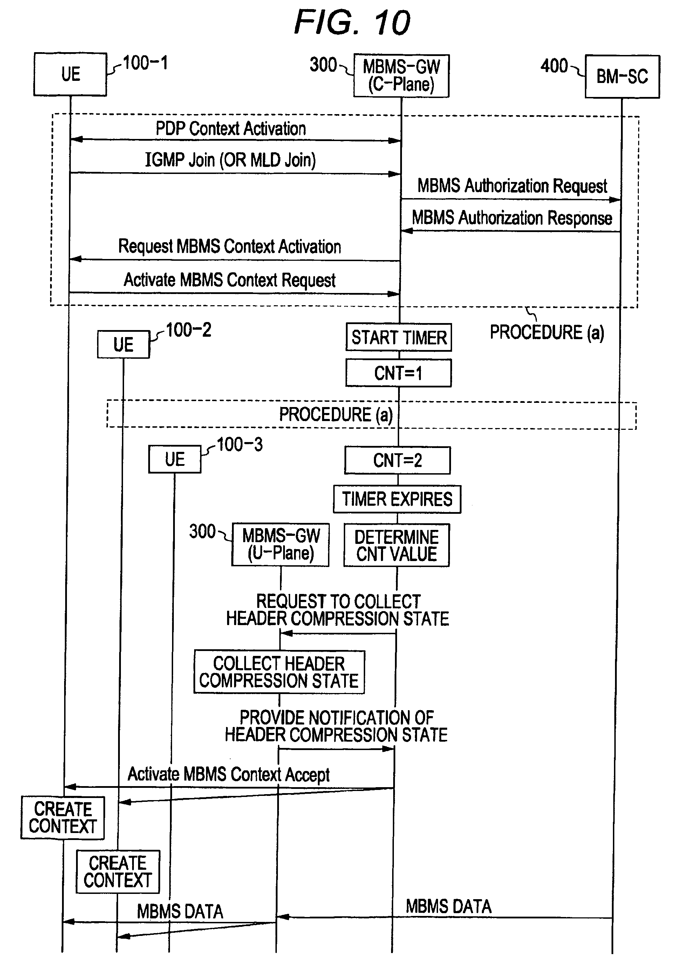

When the reception request is received from the specified number or more of UEs 100 during the specified period of time, the MBMS-GW 300 transmits a context (header-uncompressed data) to the UEs 100 that are already connected to the MBMS, at a timing determined by a lapse of the specified period of time.
An exemplary operation of the wireless communication system in the present example will be described using FIGS.9 and 10. Note that a description of the portion that is the same as that in the operation described already (the procedure (a) portion encircled by a dashed line in FIGS. 9 and 10) will not be described.

When there is a request to participate in the MBMS (MBMS data request) from the UE 100-1, the MBMS-GW 300 begins to measure a specified period of time by a timer included in the C-Plane, etc. Then, the number of the participation requests is counted by a counter included in the C-Plane, etc (CNT=1).
When there is a request to participate in the MBMS (MBMS data request) from another UE 100-2, the counter value of the counter is incremented (CNT=2).

The counting process is performed until the specified period of time has elapsed.
In an example illustrated in FIG. 9, after the counter value reaches 3 (CNT=3) by receiving an MBMS data request from the UE 100-3, the specified period of time elapses and the timer stops.
Here, the MBMS-GW 300 determines whether the counter value is less than a specified threshold value (in the example illustrated in FIG. 9, the specified threshold value = 3).

In the example illustrated in FIG. 9, the MBMS-GW 300 determines that the number of UEs 100 participating in the MBMS that is counted during the specified period of time (=3) is the specified threshold value (=3) or more.
At this time, the MBMS-GW 300 requests the U-Plane of the MBMS-GW 300 itself to set back (initialize) the current header compression state to a header-uncompressed state.
The U-Plane of the MBMS-GW 300, having received the request, sets a header compression state back to a header-uncompressed state. Then, the U-Plane of the MBMS-GW 300 provides notification of a reset (initialization) completion report, indicating that the initialization has been completed, to the C-Plane of the MBMS-GW 300.

Accordingly, after the UEs 100-1 to 100-3 participate in the MBMS, the UEs 100-1 to 100-3 first receive header-uncompressed data and thus can immediately hold a context.
As a result, the UEs 100-1 to 100-3 can normally expand (extract) header-compressed data (MBMS data) received from the BM-SC 400 and the MBMS-GW 300.

Although in the above-described example the timer stops after a lapse of the specified period of time, the timer may stop when the number of UEs 100 participating in the MBMS becomes equal to the specified threshold value. With such operation, transmission of header-uncompressed data to the UEs 100 can be performed earlier. The specified threshold value and the specified period of time can be appropriately changed.

Meanwhile, in an example illustrated in FIG. 10, when there is a request to participate in the MBMS (MBMS data request) from the UE 100-1, the MBMS-GW 300 begins to measure a specified period of time by a timer included in the C-Plane, etc. Then, the number of the participation requests is counted (CNT=1) by a counter included in the C-Plane, etc.
When there is a request to participate in the MBMS (MBMS data request) from another UE 100-2, the counter value of the counter is incremented (CNT=2).

The counting process is performed until the specified period of time has elapsed. After receiving a participation request from the UE 100-2, the specified period of time expires. Here, the MBMS-GW 300 determines whether the counter value is less than a specified threshold value (in the example illustrated in FIG. 10, the specified threshold value = 3).
In the example illustrated in FIG. 10, the MBMS-GW 300 determines that the number of UEs 100 participating in the MBMS that is counted during the specified period of time (=2) is less than the specified threshold value (=3).

The MBMS-GW 300 then requests the U-Plane of the MBMS-GW 300 itself to collect information about the current header compression state.
The U-Plane of the MBMS-GW 300, having received the request, collects information about a header compression process (a header compression state, a context, etc.) and provides notification of the information to the C-Plane of the MBMS-GW 300.

The C-Plane of the MBMS-GW 300, having received the notification, generates and edits a control message including a context for extracting header-compressed data, and transmits the control message to the UEs 100-1 and 100-2 that have requested to participate in the MBMS during the specified period of time. At this time, the MBMS-GW 300 may provide to the UEs 100-1 and 100-2 notification of a context together with a response message indicating allowance of participation in the MBMS (Activate MBMS Context Accept).

The UEs 100-1 and 100-2, having received the message from the MBMS-GW 300, can create a context for extracting header-compressed data, based on information included in the message. Alternatively, the UEs 100-1 and 100-2 can extract a context included in the message.
As a result, the UEs 100-1 and 100-2 can normally expand (extract) header-compressed data (MBMS data) received from the BM-SC 400 and the MBMS-GW 300.

As described above, in the present example, switching between individually providing notification of a context to participant UEs 100 and initializing the header compression state so as to multicast header-uncompressed data to the UEs 100 is performed according to the participation condition (e.g., participation frequency) of the UEs 100 in the MBMS.
Accordingly, when the processing load of the C-Plane of the MBMS-GW 300 is low, as exemplified in FIG. 10, header compression efficiency can be increased. On the other hand, when the processing load of the C-Plane is high, as exemplified in FIG. 9, simple control that does not impose a processing load on the C-Plane can be performed.

### [4] Third Variant.

Although the above examples describe the case in which the MBMS-GW 300 compresses a header of MBMS data, an eNB 200, for example, may also perform header compression.

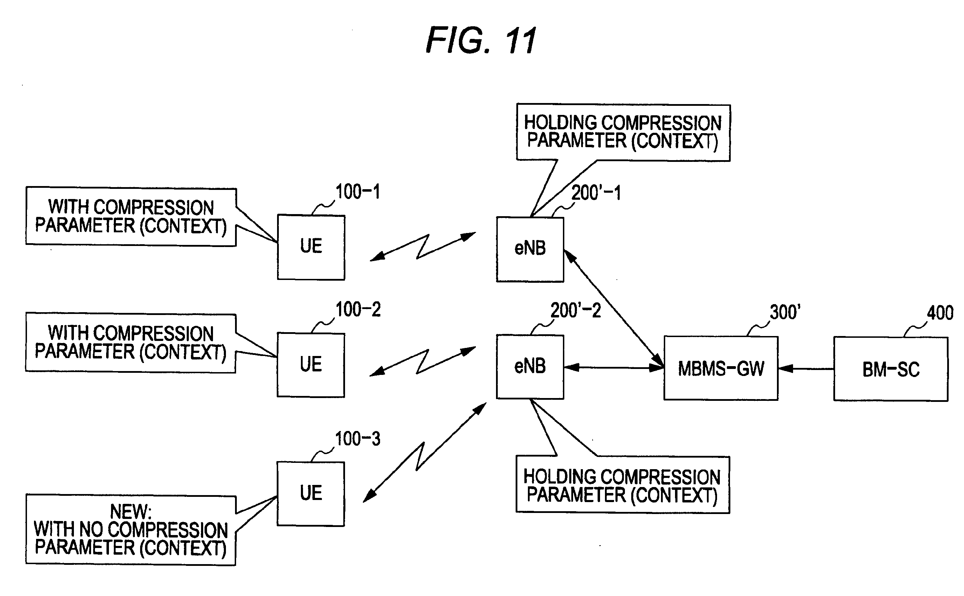

FIG. 11 is a block diagram illustrating an exemplary configuration of a wireless communication system according to the present example.
The wireless communication system illustrated in FIG. 11 includes, for example, an MBMS-GW 300' and a BM-SC 400, which is a host node of the MBMS-GW 300'. The wireless communication system includes, for example, a plurality of wireless base stations (e.g., eNBs) 200'-1 and 200'-2, and User Equipment (UEs) 100-1, 100-2, and 100-3. The MBMS-GW 300' has substantially the same functions as the already-described MBMS-GW 300 except control of a header compression state. The eNBs 200'-1 and 200'-2 control a header compression state, in addition to performing the same process as that of the already-described eNBs 200.

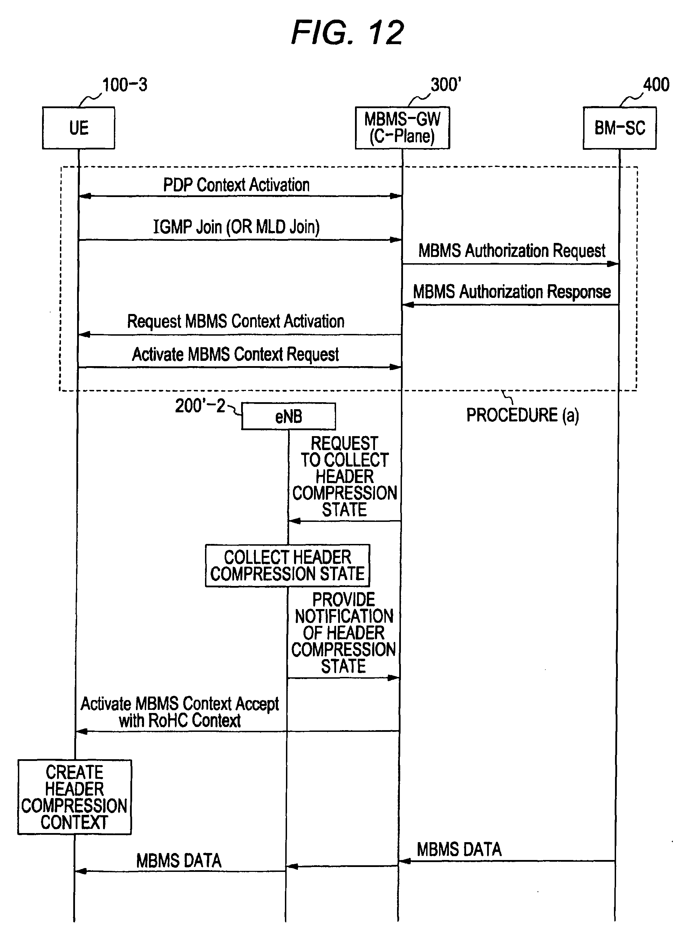

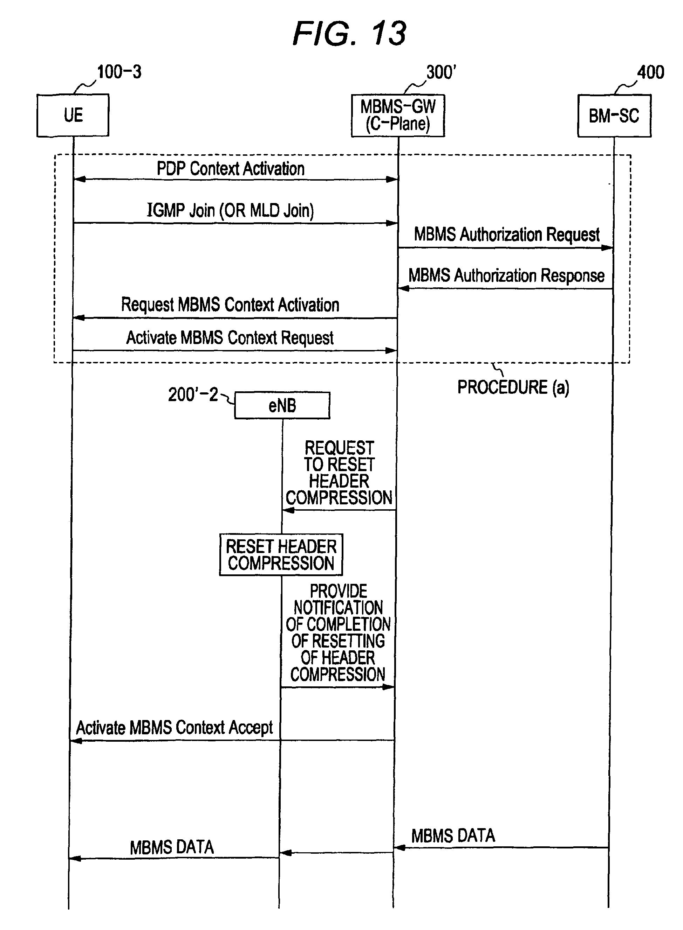

An exemplary operation of the wireless communication system in the present example will be described using FIGS. 12 and 13. Note that a description of the portion that is the same as that of the operation described already (the procedure (a) portion encircled by a dashed line in FIGS. 12 and 13) will not be repeated.
First, as exemplified in FIG. 12, when the MBMS-GW 300' receives an MBMS data request from the UE 100-3, the MBMS-GW 300' requests the eNB 200'-2 to collect information about the current header compression state.

The eNB 200'-2, having received the request, collects information about a header compression process (a header compression state, a context, etc.) and provides notification of the information to the MBMS-GW 300'.
The MBMS-GW 300', having received the notification, generates and edits a control message including a context for extracting header-compressed data, and transmits the control message to the UE 100-3. At this time, the MBMS-GW 300' may provide to the UE 100-3 notification of a context together with a response message, indicating allowance of participation in the MBMS (Activate MBMS Context Accept). Alternatively, the eNB 200'-2 may provide notification of a context to the UE 100-3.

The UE 100-3, having received the message from the MBMS-GW 300', can create a context for extracting header-compressed data, based on information included in the message. Alternatively, the UE 100-3 can extract a context included in the message.
As a result, the UE 100-3 can normally expand (extract) header-compressed data (MBMS data) received from the BM-SC 400 and the MBMS-GW 300'. Namely, by the UE 100-3 extracting a part of header information that is not included in header-compressed data, the UE 100-3 can normally perform a reception process on MBMS data.

Meanwhile, as exemplified in FIG. 13, the MBMS-GW 300', having detected participation of the UE 100-3 in the MBMS, requests the eNB 200'-2 to set back (initialize) the current header compression state to a header-uncompressed state.
The eNB 200'-2, having received the request, sets a header compression state back to a header-uncompressed state. Then, the eNB 200'-2 provides notification of a reset (initialization) completion report to the MBMS-GW 300', indicating that the initialization has been completed.

That is, in the present example, a context (header-uncompressed data) is transmitted not only to the UE 100-3 having no context, but also to the UEs 100-1 and 100-2 holding contexts, at timings other than a specified cycle in which header-uncompressed data is transmitted.
Accordingly, after the new branch 100-3 participates in the MBMS, the new branch 100-3 first receives header-uncompressed data and thus can immediately hold a context.

As a result, the UE 100-3 can normally expand (extract) header-compressed data (MBMS data) received from the BM-SC 400 and the MBMS-GW 300'.
Also, by using the same method as that in the above-described second variant, switching between individually providing notification of a context to participant UEs 100, and initializing a header compression state so as to multicast header-uncompressed data to the UEs 100 may be performed according to the participation condition of the UEs 100 in the MBMS.

With such operation, the UE 100-3 that has participated in the MBMS and does not have a context can extract MBMS data even before header-uncompressed data is transmitted in a specified cycle. Accordingly, a header expansion process can be made efficient.

### [5] Fourth Variant.

The MBMS-GW 300 may determine whether to perform the above-described communication control method (individual provision of notification of a context to a new branch or reset control of a header compression state), according to a timing of participation of a UE 100 in the MBMS.

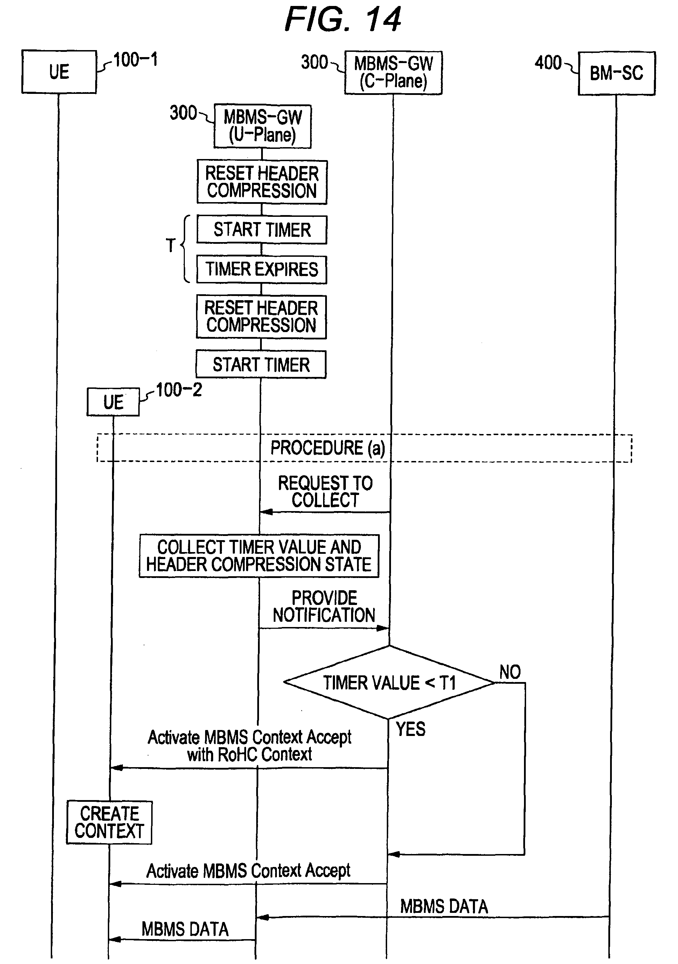

An exemplary operation of the wireless communication system according to the present example is illustrated in FIG. 14. In an example illustrated in FIG. 14, the UE 100-2 newly participates in the MBMS. The UE 100-1 has already participated in the MBMS.
The U-Plane of the MBMS-GW 300 resets a header compression state to set a header to an uncompressed state periodically (in FIG. 14, for example, every time T (T is a natural number)). For example, the U-Plane of the MBMS-GW 300 starts a timer when resetting of the header compression state has been completed and measures time T. Then, after a lapse of the time T, the U-Plane of the MBMS-GW 300 resets the header compression state.

When, during the timer measurement, there is a request to connect to the MBMS by procedure (a) (the same procedure as procedure (a) illustrated in FIG. 8) from a new branch (UE 100-2), the C-Plane of the MBMS-GW 300 in the present example requests the U-Plane of the MBMS-GW 300 itself to collect information about the current timer value (at a timing of participation of the UE 100-2). At this time, the C-Plane of the MBMS-GW 300 may request to collect information about the current header compression state.

The U-Plane of the MBMS-GW 300, having received the request, collects information about the timer value and provides notification of the information to the C-Plane of the MBMS-GW 300. At this time, information about a header compression process (a header compression state, a context, etc.) may be collected and notification of the information may be provided to the C-Plane of the MBMS-GW 300.
The C-Plane of the MBMS-GW 300, having received the notification, compares the timer value with a specified threshold value (e.g., T1 (T1 is a value satisfying T1<T)).

If the C-Plane of the MBMS-GW 300 determines that the timer value is smaller than the specified threshold value T1, then the C-Plane of the MBMS-GW 300 generates and edits a control message, including a context for extracting header-compressed data, and transmits the control message to the UE 100-2. At this time, the C-Plane of the MBMS-GW 300 may provide to the UE 100-2 notification of a context together with a response message indicating allowance of participation in the MBMS (Activate MBMS Context Accept).

The UE 100-2, having received the message from the C-Plane of the MBMS-GW 300, can create a context for extracting header-compressed data, based on information included in the message. Alternatively, the UE 100-2 can extract a context included in the message.
As a result, the UE 100-2 can normally expand (extract) header-compressed data (MBMS data) received from the BM-SC 400 and the MBMS-GW 300. Namely, the UE 100-2 extracts a part of header information that is not included in header-compressed data so that the UE 100-2 can normally perform a reception process on MBMS data.

On the other hand, if the timer value is determined to be the specified threshold value T1 or more, then the C-Plane of the MBMS-GW 300 transmits a message indicating allowance of participation of the UE 100-2 in the MBMS (Activate MBMS Context Accept), but does not transmit a context for extracting header-compressed data. In this case, the UE 100-2 is provided with notification of a context from the MBMS-GW 300 at reset timing of the header compression state after expiration of the timer.

As described above, in the present example, when, for example, a timing of participation of a UE 100 in the MBMS is close to the reset timing of a header compression state (e.g., timer value ≥ T1), notification of a context is not provided to the UE 100 and the UE 100 can be made to wait until next reset timing. On the other hand, when the timing of participation of the UE 100 in the MBMS is far from the reset timing of the header compression state (e.g., timer value < T1), notification of a context can be provided to the UE 100 using the above-described communication control method.

With such operation, the processing load of each apparatus can be significantly reduced.
Note that although the header compression state is reset triggered by the expiration of the timer in the example described above, the header compression state can also be reset based on the number of pass-through packets, for example. In this case, the timer is read as a counter for the number of pass-through packets, the timer value as a counter value of the number of pass-through packets, and T and T1 respectively as a counter value at which a header compression resetting is periodically performed and as a comparative value which is set in advance in the C-Plane of the MBMS-GW 300.

### (6) Other Variants.

The configurations and processes of the above-described UEs 100, eNBs 200 and 200', MBMS-GWs 300 and 300', and BM-SC 400 may be sorted out if necessary or may be appropriately combined.
A transmission part and a control part described in the above-described examples may be included in entities other than the eNBs 200 and 200' and the MBMS-GWs 300 and 300' or may be disposed in different apparatuses, respectively.

A reception part and an extraction part described in the above-described examples may be included in entities other than the UEs 100 or may be disposed in different apparatuses, respectively.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiment(s) of the present inventions have been described in detail, it should be understood that the various changes, substitutions, and alterations could be made hereto without departing from the scope of the claims.

## Claims

1. A transmitting apparatus that is arranged to transmit data to a plurality of receiving apparatuses (100), the transmitting apparatus comprising:
a transmission part (200) that is arranged to transmit information for extracting the data whose header is compressed; and
a control part (300) that is arranged to control the transmission part to transmit the information in a specified cycle to one or more first receiving apparatus and to transmit the information to a second receiving apparatus at a timing independent of the specified cycle when that second receiving apparatus did not receive the information during the specified cycle,
**characterised in that**:
the control part (300) is arranged to control the transmission part to not transmit the information to the second receiving apparatus at the timing independent of the specified cycle when a request to receive the data is received from the second receiving apparatus at a timing that is close to the end of the specified cycle.

2. A communication system comprising:
a transmitting apparatus according to claim 1; and
a receiving apparatus (100) that is arranged to receive data transmitted from the transmitting apparatus, the receiving apparatus comprising:
a reception part (101) that is arranged, when information for extracting the data whose header is compressed was not received during the specified cycle in which the information is transmitted, to receive the information at the timing independent of the specified cycle ; and
an extraction part (102) that is arranged to extract the data whose header is compressed, based on the information received by the reception part.

3. A transmitting method for transmitting data to a plurality of receiving apparatuses, the method comprising:
transmitting information for extracting data whose header is compressed in a specified cycle to one or more first receiving apparatus;
and
transmitting the information to a second receiving apparatus at a timing independent of the specified cycle when that second receiving apparatus did not receive the information during the specified cycle,
**characterised in that**:
the transmitting of the information to the second receiving apparatus is stopped when a request to receive the data is received from the second receiving apparatus at a timing that is close to the end of the specified cycle.

4. Software which, when executed by a processor of wireless transceiver equipment, causes the equipment to perform the transmitting method according to claim 3.

## Patentansprüche

1. Sendevorrichtung, die so ausgelegt ist, dass sie Daten an eine Mehrzahl von Empfangsvorrichtungen (100) sendet, wobei die Sendevorrichtung umfasst:
einen Sendeteil (200), der so ausgelegt ist, dass er Informationen zum Extrahieren der Daten sendet, deren Header komprimiert ist; und
einen Steuerteil (300), der so ausgelegt ist, dass er den Sendeteil so steuert, dass er die Informationen in einem spezifizierten Zyklus an eine oder mehrere erste Empfangsvorrichtungen sendet und die Informationen bei einer von dem spezifizierten Zyklus unabhängigen Zeiteinstellung an eine zweite Empfangsvorrichtung sendet, wenn die zweite Empfangsvorrichtung die Informationen während des spezifizierten Zyklus nicht empfangen hat,
**dadurch gekennzeichnet, dass**:
der Steuerteil (300) so ausgelegt ist, dass er den Sendeteil so steuert, dass er die Informationen nicht bei der von dem spezifizierten Zyklus unabhängigen Zeiteinstellung an die zweite Empfangsvorrichtung sendet, wenn eine Anforderung zum Empfang von Daten von der zweiten Empfangsvorrichtung bei einer Zeiteinstellung empfangen wird, die nahe beim Ende des spezifizierten Zyklus ist.

2. Kommunikationssystem, umfassend:
eine Sendevorrichtung nach Anspruch 1; und
eine Empfangsvorrichtung (100), die so ausgelegt ist, dass sie Daten empfängt, die von der Sendevorrichtung gesendet werden, wobei die Empfangsvorrichtung umfasst:
einen Empfangsteil (101), der so ausgelegt ist, dass er, wenn Informationen zum Extrahieren der Daten, deren Header komprimiert ist, nicht während des spezifizierten Zyklus empfangen wurden, in welchem die Informationen gesendet werden, die Informationen bei der von dem spezifizierten Zyklus unabhängigen Zeiteinstellung empfängt; und
einen Extraktionsteil (102), der so ausgelegt ist, dass er die Daten, deren Header komprimiert ist, basierend auf den Informationen extrahiert, die durch den Empfangsteil empfangen werden.

3. Sendeverfahren zum Senden von Daten an eine Mehrzahl von Empfangsvorrichtungen, wobei das Verfahren umfasst:
Senden von Informationen zum Extrahieren von Daten, deren Header komprimiert ist, in einem spezifizierten Zyklus an eine oder mehrere erste Empfangsvorrichtungen;
und
Senden der Informationen bei einer von dem spezifizierten Zyklus unabhängigen Zeiteinstellung an eine zweite Empfangsvorrichtung, wenn diese zweite Empfangsvorrichtung die Informationen während des spezifizierten Zyklus nicht empfangen hat,
**dadurch gekennzeichnet, dass**:
das Senden der Informationen an die zweite Empfangsvorrichtung angehalten wird, wenn eine Anforderung zum Empfangen der Daten von der zweiten Empfangsvorrichtung bei einer Zeiteinstellung empfangen wird, die nahe beim Ende des spezifizierten Zyklus ist.

4. Software, welche bei Ausführung durch einen Prozessor eines drahtlosen Sendeempfangsgeräts das Gerät veranlasst, das Sendeverfahren nach Anspruch 3 auszuführen.

## Revendications

1. Appareil émetteur agencé pour émettre des données vers une pluralité d'appareils récepteurs (100), l'appareil émetteur comprenant :
une partie d'émission (200) agencée pour émettre des informations pour extraire les données dont l'en-tête est compressé ; et
une partie de commande (300) agencée pour commander à la partie d'émission d'émettre les informations selon un cycle spécifié vers un ou plusieurs appareils récepteurs et pour émettre les informations vers un second appareil récepteur à un temps indépendant du cycle spécifié lorsque ce second appareil récepteur n'a pas reçu les informations pendant le cycle spécifié,
**caractérisé en ce que** :
la partie de commande (300) est agencée pour commander à la partie d'émission de ne pas émettre les informations vers le second appareil récepteur à un temps indépendant du cycle spécifié lorsqu'une demande de réception des données est reçue depuis le second appareil récepteur à un temps proche de la fin du cycle spécifié.

2. Système de communication comprenant :
un appareil émetteur selon la revendication 1 ; et
un appareil récepteur (100) agencé pour recevoir des données transmises par l'appareil émetteur, l'appareil récepteur comprenant :
une partie de réception (101) agencé, lorsque des informations pour extraire les données dont l'en-tête est compressé n'ont pas été reçues pendant le cycle spécifié durant lequel les informations sont transmises, pour recevoir les informations à un temps indépendant du cycle spécifié ; et
une partie d'extraction (102) agencée pour extraire les données dont l'en-tête est compressé, en se basant sur les informations reçues par la partie de réception.

3. Procédé d'émission pour émettre des données vers une pluralité d'appareils récepteurs, le procédé comprenant :
l'émission d'informations pour extraire des données dont l'entête est compressé selon un cycle spécifié vers un ou plusieurs appareils récepteurs ; et
l'émission des informations vers un second appareil récepteur à un temps indépendant du cycle spécifié lorsque ce second appareil récepteur n'a pas reçu les informations pendant le cycle spécifié,
**caractérisé en ce que** :
l'émission des informations vers le second appareil récepteur est interrompue lorsqu'une demande de réception des données est reçue depuis le second appareil récepteur à un temps proche de la fin du cycle spécifié.

4. Logiciel qui, lorsqu'il est exécuté par un processeur d'un appareil émetteur-récepteur sans fil, fait exécuter par l'appareil le procédé d'émission selon la revendication 3.
